Europäisches Patentamt

(19) European Patent Office

Office européen des brevets

(11) Publication number: **0 042 099**
**A2**

## (12) EUROPEAN PATENT APPLICATION

(21) Application number: **81104215.9**

(22) Date of filing: **02.06.81**

(51) Int. Cl.³: **G 01 T 3/00**

(30) Priority: **16.06.80 US 159895**

(43) Date of publication of application: **23.12.81**
**Bulletin 81/51**

(84) Designated Contracting States: **AT BE CH DE FR GB IT LI LU NL SE**

(71) Applicant: **Baron, Norton, 453 Grand Canyon, Los Alamos New Mexico (US)**

(72) Inventor: **Baron, Norton, 453 Grand Canyon, Los Alamos New Mexico (US)**

(74) Representative: **Beresford, Keith Denis Lewis et al, R G C Jenkins & Co 53-64 Chancery Lane, London WC2A 1QU (GB)**

(54) Self-regulating neutron coincidence counter.

(57) A device for accurately measuring the mass of $^{240}$Pu and $^{239}$Pu in a sample having arbitrary moderation and mixed with various contaminants. The device utilizes a thermal neutron well counter which has two concentric rings of neutron detectors separated by a moderating material surrounding the well. Neutron spectroscopic information derived by the two rings of detectors is used to measure the quantity of $^{239}$Pu and $^{240}$Pu in device which corrects for background radiation, deadtime losses of the detector and electronics and various other constants of the system.

EP 0 042 099 A2

COMPLETE DOCUMENT

BACKGROUND OF THE INVENTION

The present invention pertains generally to assaying nuclear materials and more specifically to nondestructively assaying fertile material, such as $^{240}$Pu, and fissile material, such as $^{239}$Pu, in a sample of PuO$_2$ powder using thermal neutron counting techniques.

This invention is the result of a contract with the Department of Energy (Contract No. W-7405-ENG-36).

The capability of performing an accurate and rapid measurement of the quantity of both $^{240}$Pu and $^{239}$Pu material in a sample of suspected PuO$_2$ material has been a goal of the nuclear materials processing industry since its inception. Such a capability is not only important for process control, but is essential to effectively safeguard the plutonium material. Accurate and rapid measurement would allow the plutonium material to be traced and accounted for at various stages in processing plants to guard against "lost" or "unaccounted for" material in a timely fashion. In recent studies, the General Accounting Office of the United States Government has found that present monitoring systems and methods for determining the amount of $^{239}$Pu in a given sample are too inaccurate to detect the loss of bomb size amounts in sufficient time to take proper security measures. Additionally, a portable device for measuring the mass of $^{239}$Pu in a black box is useful for a wide variety of purposes including evaluation of terrorists' threats or other such security matters.

There are three principal methods currently used to determine the masses of $^{239}$Pu and/or $^{240}$Pu in a suspected sample of PuO$_2$ material. These methods include wet chemistry, gamma ray spectroscopy, and thermal neutron counting.

Wet chemistry involves the analysis of a portion of the sample using standard analytical chemistry techniques. The percentage of Pu for the entire sample is based upon the percentage of Pu determined for the analyzed sample portion. The amounts of $^{239}$Pu and $^{240}$Pu in the sample portion are determined by mass spectrometric analyses. The principal disadvantage of this technique is that the analysis is complex and lengthy, i.e., taking on the order of days or weeks. Consequently, determining discrepancies in the mass of Pu obtained using a wet chemistry analysis is not timely with regard to the ability to take measures to locate lost or stolen material. Additionally, nonuniform distribution of Pu within the sample can result in significant variations between the mass of Pu in the sample derived from the analyzed sample portion, and the actual amount of Pu contained in the sample. Also, wet chemistry techniques necessitate obtaining a sample portion for destructive assaying which limits the utility of this technique in many situations.

A second technique conventionally used to determine the mass of a particular isotope of Pu in a sample of suspected $PuO_2$ material involves the detection and counting of gamma rays of a specific energy emitted by an excited daughter-isotope of the particular Pu isotope. The excited daughter-isotope is created by the radioactive emission of alpha particles from the Pu isotopes. Gamma rays are emitted by subsequent decay of the daughter isotope to a more stable nuclear configuration. In principle, the mass of an isotope of Pu in the sample is proportional to the intensity of its associated gamma rays which are identified by the specific energy of the gamma rays. However, partial absorption of gamma rays by the sample material renders this technique somewhat unreliable. In general, the absorption of gamma rays by a material is a function of the material's atomic number. Since Pu has such a large atomic number, there is considerable selfabsorption of gamma rays emitted in the interior of the sample. Furthermore, the degree of self-absorption varies greatly according to the uniformity with which the Pu material is distributed within the sample. Corrections for self-absorption are attempted by moving and rotating the sample through the field of view of the gamma ray detector. Although these techniques improve the accuracy of the assay, a wide margin for error remains.

The neutron counting technique depends upon the fact that a spontaneously fissioning nucleus of $^{240}Pu$ releases on the average a pair of neutrons. Consequently, the number of pairs of coincident neutrons emitted per unit time by a sample should be proportional to the amount of spontaneously fissioning material in the sample. Measurement of coincident pairs forms the basis of current assay instruments used to measure the amount of $^{240}$Pu material in a sample by neutron counting. Unfortunately, not all pairs of coincident neutrons emitted by the sample are generated by spontaneous fission events. As a result, any attempt to assay the amount of spontaneously fissioning material, such as $^{240}$Pu, in a sample by assuming its mass is linearly proportional to the count rate of pairs of coincident neutrons is subject to large errors.

For example, additional pairs of coincident neutrons are generated by fissions which are induced by: 1) spontaneous fission neutrons, and/or progeny of spontaneous fission neutrons; and, 2) reaction product neutrons, and/or progeny of reaction product neutrons, created by nuclear reactions involving a contaminant material that is mixed with Pu. Reaction product neutrons (e.g., ($\alpha$,n) reaction product neutrons) are generally caused by alpha particles from the radioactive decay of Pu nuclei interacting with the nuclei of salts or oxides of light weight elements which frequently appear as contaminants with $PuO_2$ powder in chemical processing procedures. Not only do the induced fission rates of (1) and (2) vary nonlinearly with the mass of Pu in the sample, but the number of ($\alpha$,n) reaction product neutrons available to induce some of these fissions varies among

5

samples according to the kind of contaminant material that is mixed with the Pu. In addition, the induced fission rate depends also upon the energy spectrum of spontaneous fission neutrons, and/or the progeny of spontaneous fission neutrons, and the $(\alpha,n)$ reaction product neutrons, and/or the progeny of $(\alpha,n)$ reaction product neutrons. The energy spectrum is controlled by the amount of moderating material in the sample, which can vary among samples. Also the detection efficiency of neutrons by the neutron counters in the measuring device is also dependent upon the energy spectrum of neutrons generated within the sample. Like the induced fission rate, the detection efficiency is also controlled by the amount of moderating material in the sample, which can vary among samples.

Consequently, attempts to assay material by thermal neutron counting in order to determine the content of $^{240}$Pu are accurate only if the device is calibrated with standards which have characteristics very similar to those of the samples being assayed. However, if the samples to be assayed have widely varying contents of moderating material and/or different contaminant materials, the assay results for $^{240}$Pu will be subject to rather large errors. Finally, it has been impossible to directly assay material for its $^{239}$Pu content using available thermal neutron counting devices.

### SUMMARY OF THE INVENTION

It is therefore an object of the present invention to provide an improved device for assaying both fertile and fissile nuclear material.

It is also an object of the present invention to provide a device for nondestructively assaying a sample of $PuO_2$ admixed with various contaminants to determine the mass of $^{240}Pu$ in the sample.

Another object of the present invention is to provide a device for nondestructively assaying a sample of $PuO_2$ admixed with various contaminants to determine the mass of $^{239}Pu$ in the sample.

Another object of the present invention is to provide a device for nondestructively detecting and measuring the quantity of material of mass number 240 in a sample of spontaneously fissioning material by passive thermal neutron coincidence counting.

Another object of the present invention is to provide a device for nondestructively detecting and measuring the quantity of material of mass number 239 in a sample of spontaneously fissioning material by passive thermal neutron coincidence counting.

Another object of the present invention is to provide a device for nondestructively assaying samples of $PuO_2$ material admixed with various contaminants and various amounts of moderating material to determine the mass of $^{240}Pu$ in samples.

Another object of the present invention is to provide a device for nondestructively assaying samples of $PuO_2$ material admixed with various contaminants and various amounts of moderating material to determine the mass of $^{239}Pu$ in samples.

Another object of the present invention is to provide a device for nondestructively assaying samples of $PuO_2$ material admixed with various contaminants and various amounts of moderating material to simultaneously determine the mass of $^{239}Pu$ and $^{240}Pu$.

Another object of the present invention is to provide a device for nondestructively assaying both fertile and fissile nuclear material which reduces the number of calibration standards required for making measurements.

Additional objects, advantages and novel features of the invention are set forth in part in a description which follows, and will become apparent, in part, to those skilled in the art upon examination of the following or may be learned by practice of the invention. The objects and advantages of the invention may be realized and attained by means of the instrumentalities and combinations particularly pointed out in the appended claims.

To achieve the foregoing and other objects and in accordance with the purposes of the present invention, as embodied and broadly described herein, the present invention may comprise a device for nondestructively assaying a sample of $PuO_2$ admixed with various contaminants to determine the mass of $^{240}Pu$ in the sample comprising thermal neutron well counter means having inner and outer detector rings separated by a moderating material, the thermal neutron well counter means for detecting neutrons emitted by the sample; means for producing inner and outer coincidence count rate signals and inner and outer singles count rate signals from the inner and outer detector rings; means for producing a combined coincident count rate signal indicative of the mass of $^{240}$Pu in the sample from the inner and outer coincidence count rate signals; means for generating a multiplication correction signal for induced fission neutrons; means for generating a $(\alpha,n)$ correction signal for induced $(\alpha,n)$ reaction product neutrons using the inner and outer single count rate signals; means for generating a moderation correction signal for variations of moderation due to moisture in the sample using the inner and outer coincidence count rate signal; means for generating a proportionality correction signal; means for modifying the combined coincidence count rate signal by the multiplication correction signal, the $(\alpha,n)$ correctional signal, the moderation correction signal, and the proportionality correction signal to produce a modified combined coincidence count rate signal representative of the mass of $^{240}$Pu in the sample.

The present invention may also comprise in accordance with its objects and purposes, a device for nondestructively assaying a sample of $PuO_2$ admixed with various contaminants to determine the mass of $^{239}$Pu in the sample comprising thermal neutron well counter means having inner and outer detector rings separated by a moderating material, the thermal neutron well counter means for detecting neutrons emitted by the sample; means for producing inner and outer coincidence count rate signals and inner and outer singles count rate signals from the inner and outer detector rings; means for producing a combined coincident count rate signal indicative of the mass of $^{239}$Pu in the sample from the inner and outer coincidence count rate signals; means for generating a multiplication correction signal for induced fission neutrons; means for generating a $(\alpha,n)$ correction signal for induced $(\alpha,n)$ reaction product neutrons using the inner and outer total count rate signals; means for generating a moderation correction signal for variations of moderation due to moisture in the sample using the inner and outer coincidence count rate signal; means for generating a first proportionality correction signal; means for generating a second proportionality correction signal; means for generating a neutron source correction signal to account for the relative effective source strength of neutrons for generating the induced fission neutrons; means for modifying the combined coincidence count rate signal by the multiplication correction signal, the $(\alpha,n)$ correction signal, the moderation correction signal, the first proportionality correction signal, the second proportionality correction signal, and the neutron source correction signal to produce a modified combined coincidence count rate signal representative of the mass of $^{239}$Pu in the sample.

The present invention may also comprise in accordance with its objects and purposes, a device for nondestructively detecting and measuring the quantity of material of mass number 240 in a sample of spontaneously fissioning material by passive thermal neutron coincidence counting comprising well counter means having inner and outer rings separated by a moderating material, the well counter means for detecting neutrons emitted by the sample of spontaneously fissioning material; coincidence counter means for generating inner and outer coincidence count signals representative of the number of accumulated coincident neutron pairs detected by the inner and outer rings; means for generating inner and outer singles count signals representative of the number of accumulated neutrons detected by the inner and outer rings; clock means for generating a clock signal representative of elapsed counting time; means for dividing the inner and outer coincidence count signals and the inner and outer singles count signals by the clock signal to produce inner and outer coincidence count rate signals and inner and outer singles count rate signals; means for correcting the inner and outer coincidence count rate signals and the inner and outer singles count rate signals for electronic circuitry deadtime and background radiation; means for combining the corrected inner and outer coincidence count rate signals to produce a combined coincidence count rate signal indicative of the quantity of material of mass number 240 in the sample; means for modifying the combined coincidence count rate signal for coincident pairs of neutrons resulting from induced fissions and induced (α,n) reaction produced neutrons and for variations of moderation due to the moisture content of the sample; means for calibrating the modified coincidence count rate signal to produce a signal representative of the quantity of material of mass number 240 in the sample of spontaneously fissioning material.

The present invention may also comprise in accordance with its objects and purposes, a device for nondestructively detecting and measuring the quantity of material of mass number 239 in the sample of spontaneously fissioning material by passive thermal neutron coincidence counting comprising well counter means having inner and outer rings separated by a moderating material, the well counter means for detecting neutrons emitted by the sample of spontaneously fissioning material; coincidence counter means for generating inner and outer coincidence count signals representative of the number of accumulated coincident neutron pairs detected by the inner and outer rings; means for generating inner and outer singles count signals representative of the number of accumulated neutrons detected by the inner and outer rings; clock means for generating a clock signal representative of elapsed counting time; means for dividing the inner and outer coincidence count signals and the inner and outer singles count signals by the clock signal to produce inner and outer coincidence count rate signals and inner and outer singles count rate signals; means for correcting the inner and outer coincidence count rate signals and the inner and outer singles count rate signals for electronic circuitry deadtime and background radiation; means for combining the corrected inner and outer coincidence count rate signals to produce a combined coincidence count rate signal indicative of the quantity of material of mass number 240 in the sample; means for modifying the combined coincidence count rate signal for coincident pairs of neutrons resulting from induced fissions and induced ($\alpha$,n) reaction product neutrons, for the relative effective source strength of neutrons for generating induced fission neutrons, and for variations of moderation due to the moisture content of the sample; means for calibrating the modified coincidence count rate signal to produce a signal representative of the quantity of material of mass number 239 in the sample of spontaneously fissioning material.

The present invention consequently provides a device which enables the measurement of neutron spectroscopic information. This information is used to modify the measured coincidence count rate so that the resultant modified value can then be used to determine the masses of both the fertile and fissile material in the sample. The spectroscopic information accounts for the portion of the measured count rate of coincident neutron pairs that does not result from spontaneous fission events, but instead is the result of fissions that are induced by either: 1) spontaneous fission neutrons, and/or progeny of spontaneous fission neutrons, or otherwise 2) reaction product neutrons, and/or progeny of reaction product neutrons, that were generated by nuclear reactions involving contaminant nuclei that were mixed with the fertile and fissile material in the sample. In addition, this spectroscopic information accounts for the effects on:
1) the induced fission rate; and, 2) the neutron detection
efficiency; that are caused by the presence of moderating
material in the sample.

The advantages of using the device of the present
invention for assaying material to determine the content of
fertile material, such as $^{240}$Pu, and fissile material, such
as $^{239}$Pu, are many.  First, the device of the present invention has the ability to simultaneously measure:

a)    the relative induced fission rate as a function of
      the mass of Pu in the sample and the neutron
      energy distribution within the sample;

b)    the relative efficiency with which neutrons are
      detected by neutron detectors in the measuring
      device, as a function of the neutron energy distribution;

c)    the relative production of $(\alpha,n)$ reaction product
      neutrons by different contaminants mixed with $PuO_2$
      powder in the sample.

Other assay devices that are currently in use do not make
such measurements.

Also, since the device of the present invention has the
ability to separately measure the relative induced fission
rate and the efficiency with which neutrons are detected by
the neutron detectors, the mass of $^{239}$Pu can be measured
using the results of the $^{240}$Pu assay.  Other thermal neutron counting devices provide no direct information of the content of $^{239}$Pu in the sample.

Additionally, the ability to nondestructively assay material for the content of both $^{240}$Pu and $^{239}$Pu simultaneously, by performing only a single measurement, significantly reduces the manpower and instrumentation that must be devoted to safeguarding material.

Moreover, the ability to measure separately the relative induced fission rate, the relative efficiency of detection of neutrons, and the relative production of $(\alpha,n)$ reaction product neutrons, makes it unnecessary to calibrate these devices using analyzed samples obtained from the material being assayed. Instead, as few as five calibration standards, having a prescribed character, can be used to calibrate a device. Furthermore, the same five calibration standards can be used to calibrate all devices in a facility. These calibrated devices, like those of the present invention, can be used to assay any material for its $^{240}$Pu and $^{239}$Pu content regardless of: 1) the amount of moderating material in the sample; 2) the kind of contaminant mixed with the $PuO_2$ in the sample; and, 3) the amount of plutonium in the sample. This avoids the serious problems associated with proliferation of calibration standards in a plant. The need for only a relatively small number of calibration standards (as few as 5) decreases the likelihood of covert diversion, simplifies storage and accounting problems, and reduces the inventory of valuable Pu used as calibration material.

Furthermore, the use of thermal neutron counting techniques, by the device of the present invention, provides assay results that are independent of the geometrical shape of the powder sample and uniformity of distribution of the $^{240}$Pu and $^{239}$Pu within the sample thereby resulting in a more accurate measurement.

Lastly, the device of this invention is relatively simple, easier to operate, and has less maintenance requirements than devices performing assay measurements using high resolution gamma ray spectroscopy techniques.

## BRIEF DESCRIPTION OF THE DRAWINGS

Figure 1 is a schematic cutaway top view of the device of the present invention.

Figure 2 is a schematic side cutaway view of the two-ring counter illustrated in Figure 1.

Figure 3 is a schematic block diagram of a portion of the circuitry of the present invention.

Figure 4 is a schematic block diagram of a portion of the circuitry of the present invention.

Figure 5 is a schematic block diagram of a portion of the circuitry of the present invention.

Figure 6 is a schematic block diagram of a portion of the circuitry of the present invention.

## DETAILED DESCRIPTION OF A PREFERRED EMBODIMENT OF THE INVENTION

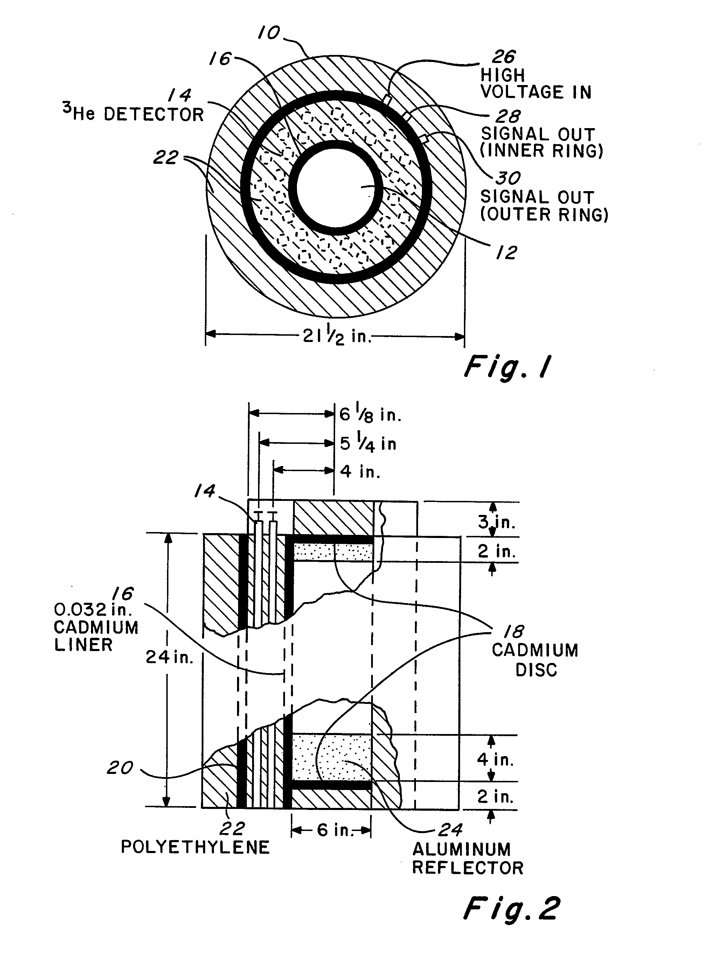

Referring to Figure 1, the present invention utilizes the neutron well counter 10 to measure the coincidence count

0042099

rate, as well as spectroscopic information, of neutrons emitted by a sample of material positioned in the well of the counter. The spectroscopic information is used to modify the measured count rate of pairs of coincident neutrons so that the resultant modified coincidence count rate is independent of the portion of the induced fission count rate that is not linearly proportional to the mass of $^{240}$Pu in the sample, regardless of the amount of moderating material in the sample. In addition, the spectroscopic information is used to modify the measured count rate of pairs of coincident neutrons so that the resultant modified coincidence count rate is independent of variations, among different samples, of the energy distribution of neutrons produced by the sample. This ensures that the efficiency with which the counter detects pairs of coincident neutrons is independent of the amount of moderating material, i.e., neutron slowing-down material, in the sample. Furthermore, the spectroscopic information is also used to modify the measured count rate of pairs of coincident neutrons so that the resultant modified coincidence count rate is independent of variations, among different samples, of the number of neutrons (i.e., $(\alpha,n)$ reaction product neutrons) generated by nuclear reactions between the alpha particles, emitted by radioactive decays of Pu nuclei, and nuclei of light weight salts or oxides which may appear as contaminants that are mixed with the Pu material in the sample. The coincidence count rate, modified to account for the induced fission rate, detection

efficiency, and $(\alpha,n)$ neutrons is subsequently used to determine the masses of both the fertile and fissile material in the sample.

The magnitude of the modified neutron coincidence count rate is proportional to the mass of fertile material, such as $^{240}Pu$, that is present in the sample. This constant of proportionality, as well as other information needed to modify the measured neutron coincidence count rate, is determined using the thermal neutron well counter 10, illustrated in Figure 1, to measure several samples, or calibration standards, which have known masses of fertile and fissile material as well as contaminants of known kinds of material. The calibration information obtained includes, in addition to the proportionality constant, quantities which are used with neutron spectroscopic information to simulate the relative portion of the measured coincidence count rate that is due to neutron induced fissions (which is related to the energy dependent relative macroscopic cross section for neutron induced fissions); the relative energy dependent cross section for neutron detection by $^{3}He$ proportional counters; and the relative cross sections for $(\alpha,n)$ neutron production by contaminants. Subsequently, any sample can be assayed to determine fertile material content using the above calibration information, the measured coincident neutron count rate, and neutron spectroscopic information obtained using the device of the present invention.

Furthermore, the coincidence count rate due only to induced fissions can be determined from the same calibration information used to determine the quantity of fertile material. The magnitude of the induced fission count rate is proportional to a function of the masses of fertile and fissile material in the sample, as well as a factor which simulates the energy dependent cross section for neutron induced fissions. This constant of proportionality and cross section factor are determined using the same data obtained from measuring the calibration standards. Subsequently, any sample can be assayed for its fissile material content using this calibration information, the induced fission count rate, and the previously determined quantity of fertile material in the sample.

The device of the present invention has direct application for assaying powder samples of fissionable material such as $PuO_2$ powder which may or may not be contaminated or mixed with other powders such as salts or oxides of elements which undergo nuclear reactions and result in the release of neutrons that have the potential of inducing fissions and, varying quantities of neutron moderation material such as water which moderates the energy distribution of neutrons emitted by the sample.

Referring again to Figure 1, the two-ring thermal neutron detector 10 has a cylindrical cavity indicated as well 12 which is approximately 16 cm dia. x 51 cm long into which the sample to be measured is placed for neutron counting.

Neutrons are counted by $^3$He filled proportional counting tubes having dimensions of approximately 2.5 cm dia. x 51 cm long. The detector has 16 counting tubes 14 placed symmetrically about the well in two concentric rings. The tubes 14 are embedded in polyethylene ($CH_2$) moderating material 22. The well 12 is lined with cadmium 16 to inhibit multiplication caused by thermalized neutrons being backscattered into the well, and to provide a system die-away time which is relatively independent of the sample. The detector 10 is designed to be undermoderated. The die-away times of the inner and outer rings are readily measured to be approximately 30 microseconds and 45 microseconds respectively. Measurement of the die-away times has been reported by Norton Baron in Los Alamos Scientific Laboratory Report LA-6849-PR (1977), page 40, available at the Library of Congress. Design considerations for thermal neutron well counters are disclosed by Norbert Ensslin et al. in the publication by the Institute of Nuclear Materials Management, Summer Issue, 1978.

To understand the manner in which the mass of $^{240}$Pu and $^{239}$Pu in a sample can be determined using the well counter of Figures 1 and 2, the operation of the present invention must be described in relation to the physical phenomena occurring within the sample. Each spontaneous fission event by a fertile nucleus, such as the isotope $^{240}$Pu, emits an average of several prompt neutrons. Consequently, in the presence of such material, the measured coincidence neutron count rate due to spontaneous fission events is proportional to the mass of spontaneously fissioning material. The proportionality constant is referred to as the specific response rate (SRR) of the detection system and is defined as:

$$SRR \equiv \frac{\dot{n}_{SF}}{eff \cdot M_{240}} \qquad (1)$$

where $\dot{n}_{SF}$ is the count rate of coincident-neutron pairs resulting only from spontaneous fissions, eff is the relative efficiency with which the detector counts such pairs and is a function only of the energy distribution of fission neutrons, and $M_{240}$ denotes the mass of fertile material such as isotope $^{240}Pu$.

The coincident-neutron count rate $(\dot{n})$ actually measured by the well counter of Figures 1 and 2 is, however, the sum of the count rates of coincident-neutron pairs due to both spontaneous fissions $(\dot{n}_{SF})$ and induced fissions. This is true since induced fissions will always be produced by spontaneous fission neutrons and progeny of spontaneous fission neutrons. The contribution to the measured coincident-neutron count rate $(\dot{n})$ by fissions induced by spontaneous fission neutrons is referred to as the self-multiplication coincidence count rate $(\dot{n}_{SM})$.

The sample to be measured using nondestructive assay techniques is often contaminated with oxides or salts of light weight elements having large $(\alpha,n)$ reaction cross sections. Since both $^{239}Pu$ and $^{240}Pu$ are sources of

radioactive decay α-particles, the presence of such contaminants results in the generation of a significant number of (α,n) reaction product neutrons which induce fissions. The contribution of these (α,n) neutrons to $\dot{n}$ is referred to as the induced multiplication coincidence rate ($\dot{n}_{IM}$).

The measured coincidence count rate $\dot{n}$ can now be written as:

$$\dot{n} = \dot{n}_{SF} + \dot{n}_{SM} + \dot{n}_{IM} \tag{2}$$

Using the above relation, the quantity $\dot{n}_{SF}$ that must be extracted from the measured count rate $\dot{n}$ in order to calculate the constant of the system SRR is given by:

$$\dot{n}_{SF} = \dot{n} \cdot \left[ \frac{\dot{n}_{SF}}{\dot{n}_{SF} + \dot{n}_{SM} + \dot{n}_{IM}} \right] \tag{3}$$

Defining the bracketed term in Eq. 3 to be the inverse of the correction factor IF for induced fissions where:

$$IF \equiv 1 + \frac{\dot{n}_{SN}}{\dot{n}_{SF}} + \frac{\dot{n}_{IM}}{\dot{n}_{SF}} \tag{4}$$

allows Eq. 3 to be written as:

$$\dot{n}_{SF} = \frac{\dot{n}}{IF} \tag{5}$$

Substituting Eq. 5 into Eq. 1 gives

$$SRR = \frac{\dot{n}}{IF \cdot eff \cdot M_{240}} \qquad (6)$$

As disclosed in the Proceedings of the Symposium on Nuclear Material Safeguards, Published by International Atomic Energy Agency, Vienna, Austria, 1979, Vol. II, pp. 161-177, the factor IF is approximately separable into the product of two factors:

$$IF = F_{Pu} \cdot F_{\alpha n} \qquad (7)$$

Substituting Eq. 7 into Eq. 6 gives:

$$SRR = \frac{\dot{n}}{eff \cdot F_{Pu} \cdot F_{\alpha n} \cdot M_{240}} \qquad (8)$$

The factor $F_{Pu}$ is proportional to the fraction of the measured coincident neutron count rate that does not vary linearly with the mass of spontaneously fissioning material. These are pairs of coincident neutrons which result from fissions induced by spontaneous fission neutrons and $(\alpha,n)$ neutrons in excess of the induced fissions that vary directly with the spontaneous fission rate.

$F_{\alpha n}$ is the portion of IF which accounts for variations among different samples of the induced fission rate due to the variable production rate of $(\alpha,n)$ neutrons. This is controlled by the kind of matrix material, i.e., contaminant, that is mixed with the Pu. The value of $F_{\alpha n}$ is proportional

to: 1) the probability that a random neutron of energy $E_n$ is generated by the $(\alpha,n)$ reaction in the matrix material, 2) a function of neutron energy which accounts for the difference between the probabilities of inducing a fission by spontaneous fission neutrons and $(\alpha,n)$ neutrons, and 3) the multiplicity associated with fissions induced by $(\alpha,n)$ neutrons, which determines the relative detection efficiency of coincident neutron pairs generated by those fissions. The magnitude of $F_{\alpha n}$ for a particular matrix material is a factor which is approximately constant. Although $F_{\alpha n}$ is primarily dependent on the magnitude of the $(\alpha,n)$ reaction cross sections, it can also be thought of as follows. The effect of variable $(\alpha,n)$ neutron production among samples is to provide a unique effective multiplicity that is associated with material such as Pu in the presence of a particular matrix material. By dividing the measured count rate by the term $F_{\alpha n}$ in Eq. 8, the effect of the variable effective multiplicity is eliminated.

Using the above equations, the measured coincident neutron count rate corrected for relative detection efficiency is written as follows:

$$\frac{\dot{n}}{eff} = \left[\frac{\dot{n}}{eff \cdot F_{Pu} \cdot F_{\alpha n}}\right] + \left[\frac{\dot{n}}{eff \cdot F_{\alpha n}} - \frac{\dot{n}}{eff \cdot F_{\alpha n} \cdot F_{Pu}}\right] \quad (9)$$

$$+ \left[\frac{\dot{n}}{eff} - \frac{\dot{n}}{eff \cdot F_{\alpha n}}\right]$$

The quantity

$$\left[ \frac{\dot{n}}{eff \cdot F_{Pu} \cdot F_{\alpha n}} \right] \tag{10}$$

in Eq. 9 represents the coincident neutron count rate that is proportional to the mass of spontaneously fissioning material in the sample.

The quantity

$$\left[ \frac{\dot{n}}{eff \cdot F_{\alpha n}} - \frac{\dot{n}}{eff \cdot F_{\alpha n} \cdot F_{Pu}} \right] \tag{11}$$

in Eq. 9 represents the portion of induced fissions that varies nonlinearly with the mass of spontaneously fissioning material. These include fissions induced by both spontaneous fission neutrons and $(\alpha,n)$ neutrons. The induced fission count rate given in expression 11 is independent of contaminant, since the measured count rate is divided by $F_{\alpha n}$ thereby eliminating the effect of a varying number of $(\alpha,n)$ neutrons for inducing fissions. The induced fission rate of expression 11 can be considered to be proportional to the product of three quantities: 1) the neutron flux rate, which is proportional to the mass of spontaneously fissioning material, $M_{240}$, 2) the energy dependent fission cross section, which is typically denoted by $\sigma_f(E)$, and 3) the density of fissile material, which is proportional to the mass of fissile material, $M_{239}$. The product of $M_{240} \cdot \sigma_f(E)$ is modeled as $M_{240}^W$ where w is an energy dependent calibration factor and is clearly related to the energy dependent fission cross section. Using this model, an equation for the induced fission rate given by expression 11 can be written as:

$$\frac{\dot{n}}{eff \cdot F_{\alpha n}} - \frac{\dot{n}}{eff \cdot F_{\alpha n} \cdot F_{Pu}} = VM^{W}_{240}M_{239} \qquad (12)$$

where the constant V and factor w are determined by calibrating the system.

Finally, the quantity:

$$\frac{\dot{n}}{eff} - \frac{\dot{n}}{eff \cdot F_{\alpha n}} \qquad (13)$$

in Eq. 9 represents the portion of the coincident neutron count rate equal to the amount by which the induced fission count rate was reduced in expression 11 in order to assure that expression 11 is independent of contaminant in the sample.

To relate the above equations to physical quantities, as set forth in the above disclosed Proceedings of the Symposium on Nuclear Material Safeguards, Published by the International Atomic Energy Agency, Vienna, Austria, 1979, Vol. II, pp. 161-177, $F_{\alpha n}$ is defined as a function of neutron spectroscopic information measured by the outer to inner ring ratio of the singles count rates, $\dot{T}_{O}/\dot{T}_{I}$. For the detector illustrated in Figure 1:

$$F_{\alpha n} \equiv \left(\dot{T}_O / \dot{T}_I\right)^y \qquad (14)$$

where y is an empirically determined calibration constant.

Similarly, eff is defined as a function of neutron spectroscopic information measured by the inner to outer ring ratio of the neutron coincidence count rates , $\dot{n}_I / \dot{n}_O$. For the detector illustrated in Figure 1:

$$eff \equiv \left(\dot{n}_I / \dot{n}_O\right)^z \qquad (15)$$

where z is an empirically determined calibration constant. Since all fission neutrons of concern are born with nearly the same energy distribution, and only fission neutrons contribute to the coincidence count rate, the ratio $\dot{n}_I / \dot{n}_O$ clearly defines the energy distribution of the neutrons in the sample and is a measure of the amount of moderating material in the sample. The value of eff given by Eq. 15 gives relative energy dependent cross sections for neutron detection by the $^3$He proportional counters used in the device of this invention. To determine the calibration constant z in Eq. 15, the value of $\dot{n}_I / \dot{n}_O$ measured for a sample must be varied without affecting the induced fission rate. The method by which this is done is described in the above disclosed Proceedings of the Symposium on Nuclear Materials Safeguards, published by the International Atomic Energy Agency, Vienna, Austria, 1979, Vol. II, pp. 161-177.

The quantity $F_{Pu}$ is proportional to the induced fission count rate which was described, when discussing expression 11, as being proportional to the product of:

$$M_{240} \cdot \sigma_f(E) \cdot M_{239} \qquad (16)$$

Assuming nearly constant Pu isotopic abundance among samples to be assayed, $M_{239}$ can be expressed in terms of the product of $M_{240}$ and a constant multiplicative factor. Thus the induced fission rate can be considered to be proportional to:

$$M_{240}^{2} \cdot \sigma_f(E) \qquad (17)$$

which leads to an expression for $F_{Pu}$ given by:

$$F_{Pu} = (M_{240})^{x-1} \qquad (18)$$

where x is an energy dependent calibration factor and, like the exponent w in Eq. 12, is clearly related to the energy dependent fission cross section.

Substituting Eqs. 14, 15, and 18 into Eq. 8 gives:

$$SRR = \frac{\dot{n}}{(\dot{T}_O/\dot{T}_I)^{y} \cdot (\dot{n}_I/\dot{n}_O)^{z} \cdot M_{240}^{x}} \qquad (19)$$

The measured coincidence count, $\dot{n}$, can be written in terms of the coincidence count rates measured by both the inner and outer rings of neutron counters in the device of the present invention where:

$$\dot{n} = \dot{n}_I + \dot{n}_O + 2 \cdot (\dot{n}_I \cdot \dot{n}_O)^{1/2} \tag{20}$$

Using Eqs. 19 and 20, the mass of $^{240}$Pu in any sample is:

$$M_{240} = \exp \frac{\ln \left( \dfrac{\dot{n}_I + \dot{n}_O + 2 \cdot (\dot{n}_I \cdot \dot{n}_O)^{1/2}}{(T_O/T_I)^Y \cdot (\dot{n}_I/\dot{n}_O)^Z \cdot SRR} \right)}{x} \tag{21}$$

where SRR, y, and z are calibration constants and x is an energy dependent calibration factor.

The mass of $^{239}$Pu in a sample of $PuO_2$ powder having arbitrary moderation properties is obtained by substituting Equations 14, 15, and 18 into Equation 12 and solving for $M_{239}$. Using Eq. 20 to combine the counting data of both rings of a two ring detector such as illustrated in Figure 1, the result is:

$$M_{239} = \frac{(\dot{n}_I + \dot{n}_O + 2 \cdot (\dot{n}_I \cdot \dot{n}_O)^{1/2}) \; [1 - \dfrac{1}{M_{240}^{(x-1)}}]}{(\dot{n}_I/\dot{n}_O)^Z \cdot (T_O/T_I)^Y \cdot y \cdot M_{240}^W} \tag{22}$$

where V is a calibration constant and w is an energy dependent calibration factor.

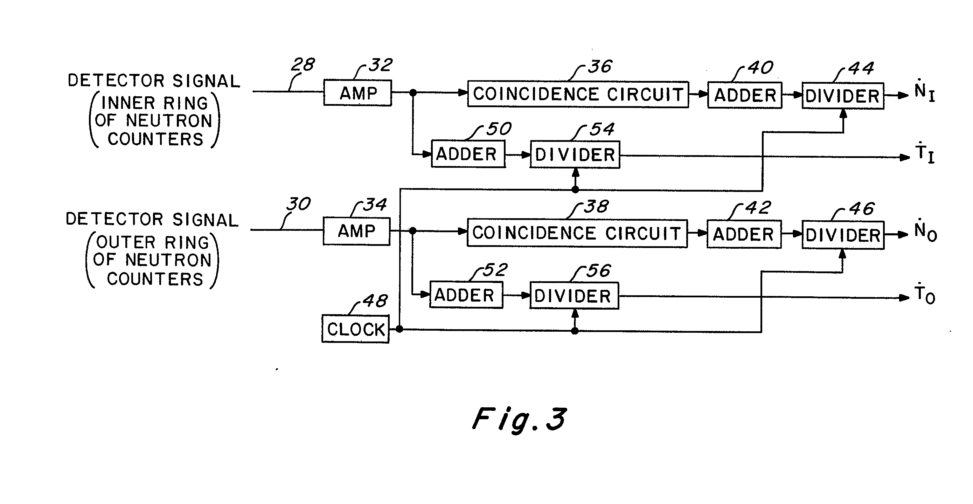

Equations 21 and 22 form the basis for measuring the mass of $^{240}$Pu and $^{239}$Pu in a sample of $PuO_2$ powder having arbitrary moderation properties and mixed with various contaminants, using the circuitry illustrated in Figures 3-6.

Referring to Figure 3, detector signal 28 from the inner ring of neutron counters and detector signal 30 from the outer ring of neutron counters are applied to amplifiers 32 and 34 respectively. Coincidence circuits 36 and 38 which are described by J. E. Swansen et al., Los Alamos Progress Report LA-6788-PR (1976), available at the Library of Congress, detect coincidence counts which are applied to adders 40 and 42, respectively, to accumulate coincidence counts for both the inner and outer detector rings. The accumulated coincidence counts, which are divided in dividers 44 and 46 by clock signal 48, provide an inner ring coincidence count rate signal $\dot{N}_I$ and an outer ring coincidence count rate signal $\dot{N}_O$.

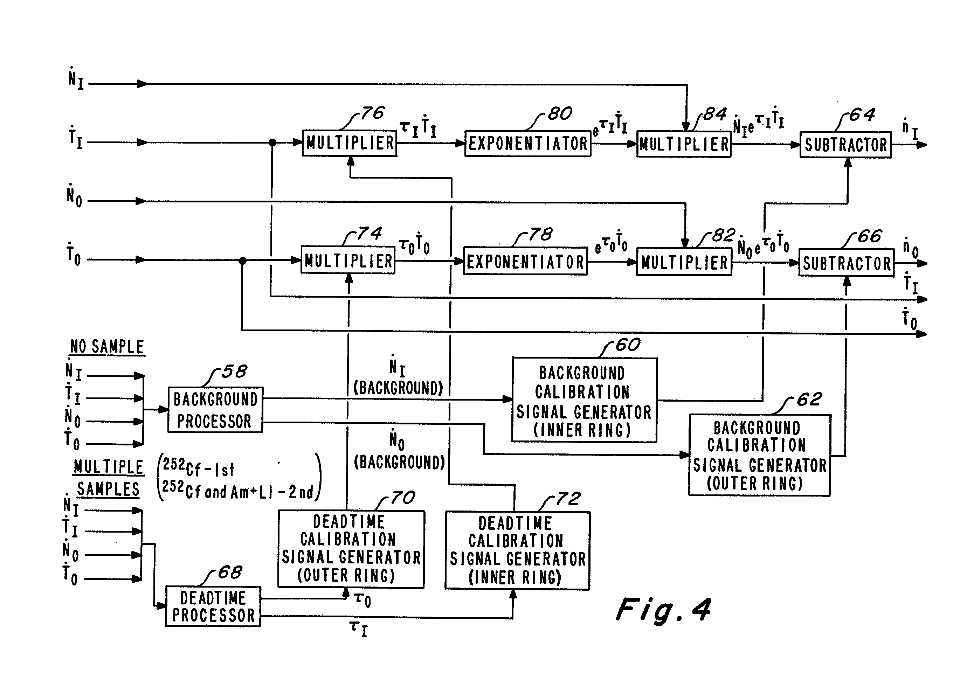

The singles count rate signals are accumulated in adders 50 and 52 for the inner and outer rings respectively. The accumulated singles counts are divided in dividers 54 and 56 by clock signal 48 to provide an inner ring single count rate signal $\dot{T}_I$ and an outer ring single count rate signal $\dot{T}_O$, respectively. These signals are applied to the circuitry illustrated in Figure 4.

Naturally occurring background radiation also affects the count rate signals obtained in Figure 3. To correct for background radiation, the two ring detector illustrated in Figures 1 and 2 is operated with no sample and the resultant signals obtained are applied to background processor 58. Background processor 58 operates in the same manner as the circuitry illustrated in Figure 3 to obtain an inner ring count rate signal $\dot{N}_I$ due to background radiation and an outer ring count rate signal $\dot{N}_O$ due to background radiation. These signals are applied to background calibration signal generators 60 and 62, respectively, which generate a background calibration signal which is applied to subtractors 64 and 66 to account for background radiation.

The deadtime losses of the system resulting from the response time of the detector illustrated in Figure 1 and the electronics illustrated in Figure 3 similarly affect the count rate signals obtained by the circuitry illustrated in Figure 3. To correct for deadtime losses, deadtime processor 68 produces an outer ring deadtime calibration signal $\tau_O$ and an inner ring deadtime calibration signal $\tau_I$ which are applied to deadtime calibration signal generators 70 and 72. Deadtime processor 68 computes the deadtime parameter $\tau$ using multiple samples of $^{252}$Cf and Am mixed with Lithium. The deadtime parameter $\tau$ is calculated using the expression:

$$\tau = \frac{\ln \ (\dot{N})_1/(\dot{N})_2}{(\dot{T})_2 - (\dot{T})_1}$$

where $(\overset{\bullet}{N})_1$ and $(\overset{\bullet}{T})_1$ represent the results of the first of two measurements of coincident and singles neutron count rates using the detector of Figures 1 and 2 and the circuitry of Figure 3 having a spontaneously fissioning sample of $^{252}$Cf situated in the well, and where $(\overset{\bullet}{N})_2$ and $(\overset{\bullet}{T})_2$ represent the results of a second measurement of coincident and single neutron count rates made using the detector of Figures 1 and 2 in the circuitry of Figure 3 in the presence of the same $^{252}$Cf source, with its position undisturbed and, a sample of Am mixed with Li situated adjacent to the $^{252}$Cf source.

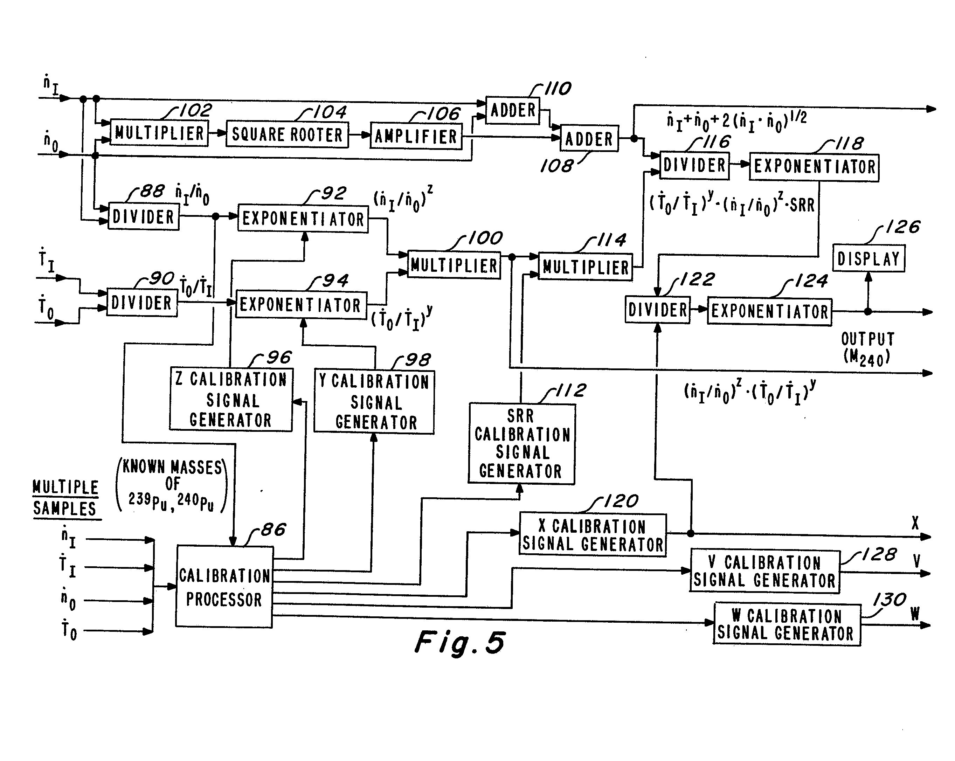

Deadtime calibration signal generators 70 and 72 generate an electrical signal representative of the deadtime parameter τ which is applied to multiplier 74 and 76 respectively. The multiplied deadtime calibration signal and the singles count rate signal is exponentiated in exponentiators 78 and 80 and multiplied in multipliers 82 and 84 to obtain the deadtime corrected signal which is applied to subtractors 66 and 64 respectively to obtain the outer ring coincidence count rate signal corrected for background increases and deadtime losses $(\overset{\bullet}{n}_O)$ and the inner ring coincidence count rate signal corrected for background increases and deadtime losses $(\overset{\bullet}{n}_I)$. These quantities are applied to the circuitry of Figure 5.

After the measured quantities applied to the circuitry of Figure 4 are corrected for deadtime losses and background radiation, the circuitry of Figure 5 determines the mass of

$^{240}$Pu in the sample. Calibration processor 86 generates calibration signals z, y, SRR, x, V and w using the detector of Figures 1 and 2 and the circuitry of Figures 3 and 4 with multiple samples of $^{239}$Pu and $^{240}$Pu having known masses. To determine the calibration constants SRR, V, y and z as well as the energy dependent calibration factors x and w, it is necessary to measure a minimum of three calibration standards of PuO$_2$ powder containing quantities of $^{240}$Pu which cover the mass range expected in the samples which must be assayed. One of the samples should consist of PuO$_2$ only and the other two should consist of PuO$_2$ mixed with SiO$_2$ and PuO$_2$ mixed with MgO. All three of these calibration standards should have the same amount of moderating material in order that the energy distributions of the fission neutrons, as measured by the ratio $\dot{n}_I/\dot{n}_O$, is the same for each of these calibration standards. The amount of moderating material in these samples should be minimal, i.e., they should be dry. The manner in which the calibration processor generates the calibration constants SRR, y, z, and a value for x, associated with the neutron energy distribution characterized by the value of $\dot{n}_I/\dot{n}_O$ of these calibration standards, is disclosed in the above-referenced Proceedings of the Symposium on Nuclear Material Safeguards, published by the International Atomic Energy Agency, Vienna, Austria 1979, Vol. II, pp. 161-177.

As mentioned previously, the calibration factor x is closely related to the fission cross section and is energy dependent. Consequently, the appropriate value of x to use in Eq. 21 when calculating the amount of $^{240}$Pu in a sample is established by the value of $\dot{n}_I/\dot{n}_O$ measured for that sample. Solving Eq. 21 for x gives the expression:

$$x = \frac{\ln\left[\frac{\dot{n}_I + \dot{n}_O + 2 \cdot (\dot{n}_I \cdot \dot{n}_O)^{1/2}}{(T_O/T_I)^y \cdot (\dot{n}_I/\dot{n}_O)^z \cdot SRR}\right]}{\ln M_{240}} \tag{23}$$

which allows the determination of x associated with a value of $\dot{n}_I/\dot{n}_O$ measured for a calibration standard. The general relationship of x to $\dot{n}_I/\dot{n}_O$ is obtained by measuring two additional standards containing only $PuO_2$ and having significantly different amounts of moderating material, i.e., water, in comparison to each other as well as to the initially used dry $PuO_2$ calibration standard. The water should be intimately mixed with the $PuO_2$ in each of these two heavily moderated calibrated standards. Furthermore, these two additional calibration standards should also have: 1) the same Pu isotopic abundances as the initial three calibration standards; and, 2) known masses of Pu, the magnitudes of which lie somewhere within the mass range of the initial three calibration standards. Using Eq. 23, values of x are determined for each of these two heavily moderated samples using: 1) measured values of $\dot{n}_I$, $\dot{n}_O$, $T_I$, and $T_O$; 2) known values of $M_{240}$; and, 3) calibration constants SRR, y, and z determined using the three initial dry calibration standards.

Values of x are now known for three different values of $\dot{n}_I/\dot{n}_O$, i.e., three different degrees of sample moderation. Consequently, values of x for any values of $\dot{n}_I/\dot{n}_O$ are determined using this data and a curve fitting processor, which is included in the calibration processor 86, to generate a functional relationship written schematically as

$$x = f_x \ (\dot{n}_I/\dot{n}_O) \tag{24}$$

Dividers 88 and 90 produce ratios of the coincidence count rate signals and singles count rate signals which are exponentiated in exponentiators 92 and 94 by the calibration constants z and y, respectively. Calibration signal generators 96 and 98 produce electric signals representative of calibration constants z and y respectively. Multiplier 100 produces the product of the outputs of exponentiators 92 and 94.

The coincidence count rate signals $\dot{n}_I$ and $\dot{n}_O$ are multiplied by multiplier 102 and then square rooted in square rooter 104 and amplified in amplifier 106 and added in adder 108 to the sum of $\dot{n}_I$ and $\dot{n}_O$ produced by adder 110. The output of adder 108 is an electrical signal representative of the combined coincidence count rate in Equations 21 and 22. SRR calibration signal generator 112 produces an electrical signal representative of the calibration constant SRR. This signal is applied to multiplier 114 to produce an output representative of a quantity in Equation 21. The output from adder 108 and multiplier 114 are divided in divider 116 to produce the expression shown in Equation 21. This electrical signal is then applied to exponentiator 118 which takes the logarithm of the function generated by divider 116. Calibration signal generator 120 produces an electrical signal representative of the calibration factor x which was produced by the calibration processor 86 using the value of $\dot{n}_I/\dot{n}_O$ generated by divider 88. The x calibration signal is applied to divider 122 and the quotient is exponentiated in exponentiator 124 to produce a signal representative of the mass of $^{240}$Pu in the sample. The signal is displayed in display 126.

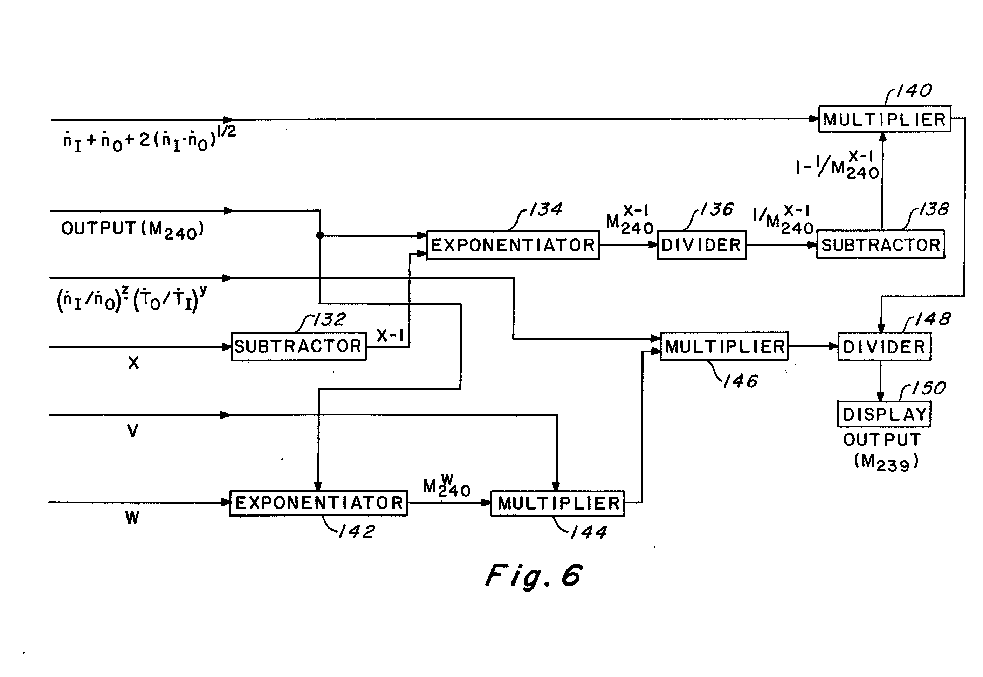

While Figure 5 schematically illustrates the circuitry required to generate a signal representative of the mass of $^{240}$Pu in the sample, Figure 6 utilizes the information generated in Figure 5 to produce a signal representative of the mass of $^{239}$Pu in the sample as given by Eq. 22.

The values of the calibration constant V and energy dependent calibration factor w that are associated with the value of $\dot{n}_I/\dot{n}_O$ of the three initial dry calibration standards are determined by applying a least squares fitting procedure to Eq. 22 in the same way that values of SRR and z were determined for Eq. 21 in the above referenced Proceedings of the Symposium on Nuclear Materials Safeguards, published by the International Atomic Energy Agency, Vienna, Austria 1979, Vol. II, pp. 161-177. Values of V and w are determined using, in Eq. 22, the measured values of $\dot{n}_I$, $\dot{n}_O$, $\dot{T}_I$, and $\dot{T}_O$ of each of the three previously mentioned dry calibration

36

standards, and results of the previous analysis which produced values x, y, and z.

However, just as x in Eq. 21 is related to the fission cross section, and is functionally dependent on the neutron energy distribution represented by $\dot{n}_I/\dot{n}_O$, so is w in Eq. 22 related to the fission cross section, and is also functionally dependent on the ratio $\dot{n}_I/\dot{n}_O$. Consequently, the appropriate value of w to be used in Eq. 22 when calculating the amount of $^{239}$Pu in a sample is established by the value of $\dot{n}_I/\dot{n}_O$ measured for that sample. Solving Eq. 22 for w gives the expression:

$$w = \frac{\ln\left\{\frac{[\dot{n}_I + \dot{n}_O + 2 \cdot (\dot{n}_I \cdot \dot{n}_O)^{1/2}] \; [1 - \frac{1}{(M_{240})^{x-1}}]}{(\dot{n}_I/\dot{n}_O)^z \cdot (T_O/T_I)^y \cdot V \cdot M_{239}}\right\}}{\ln M_{240}} \qquad (25)$$

which allows the determination of w associated with a value $\dot{n}_I/\dot{n}_O$ measured for a calibration standard. By substituting in Eq. 25 the data obtained from the two more heavily moderated calibration standards of PuO$_2$, previously described and used to obtain x as a function of $\dot{n}_I/\dot{n}_O$, along with the previously determined calibration constants y, z, and V as well as the appropriate values of x and known values of M$_{239}$ and M$_{240}$, values of w are determined for each of the two heavily moderated standards. Values of w are now known for three different values of $\dot{n}_I/\dot{n}_O$, i.e., three different degrees of sample moderation. Consequently, values of w for any values

of $\dot{n}_I/\dot{n}_O$ are determined using this data and a curve fitting processor, which is included in the calibration processor 86, to generate a functional relationship written schematically as:

$$w = F_w \ (\dot{n}_I/\dot{n}_O) \tag{26}$$

Calibration signal generators 128 and 130 in Figure 5 produce electrical signals representative of the calibration constant V and the energy dependent calibration factor, w, respectively. The signal representative of calibration factor x is applied to subtractor 132 to subtract the quantity 1 from the calibration signal x. This output signal is applied to exponentiator 134 which exponentiates the output signal representative of the mass of $^{240}$Pu by the signal representative of the constant x-1. The output of exponentiator 134 is applied to divider 136 which produces the inverse of the output of exponentiator 134. The output of divider 136 is applied to subtractor 138 which subtracts the output of divider 136 from the constant 1. The output of subtractor 138 is applied to multiplier 140, along with the output of adder 108 of Figure 5 to produce a signal representative of the numerator of Equation 22. The signal representative of the calibration factor w is applied to exponentiator 142 along with the signal representative of the mass of $^{240}$Pu to produce a signal representative of the quantity $M_{240}^w$. The output of exponentiator 142 is then applied to multiplier 144 along with constant V to produce a product which is applied to multiplier 146 along with the output of multiplier 120 of Figure 5. The output of multiplier 146 is a signal representative of the denominator of Equation 22. The output of multiplier 146 and multiplier 140 are applied to divider 148 to produce a signal representative of the mass of $^{239}$Pu which is applied to display 50 for visual recognition.

The present invention therefore provides a device for measuring both the mass of fertile and fissile material in a sample. Specifically the present invention is designed to measure the mass of $^{240}$Pu and $^{239}$Pu in a sample having various contaminants and arbitrary moderation properties. The output signal provided by the device of the present invention can be obtained in a rapid manner and does not require destructive analysis of a portion of the sample. Additionally, both the mass of $^{239}$Pu and $^{240}$Pu can be determined in a highly accurate manner independent of uniformity of distribution of fertile or fissile material in the sample or any other geometrical constraints. Unlike previous neutron coincidence counting devices, the present invention accounts for variable moderation, variable contaminants, and induced fissions as well as background and deadtime losses of the device.

The foregoing description of the preferred embodiment of the invention has been presented for the purpose of illustration and description. It is not intended to be exhaustive or to limit the invention to the precise form disclosed, and obviously many modifications and variations are possible in light of the above teachings. The disclosed embodiment was chosen and described in order to best explain the principles of the invention and its practical application to thereby enable others skilled in the art to best utilize the invention and various embodiments and with various modifications as are suited to the particular use contemplated. It is intended that the scope of the invention be defined by claims appended hereto.

## CLAIMS

1.  A device for nondestructively assaying a sample of $PuO_2$ admixed with various contaminants to determine the mass of $^{240}Pu$ in said sample comprising:

    thermal neutron well counter means having inner and outer detector rings separated by a moderating material, said thermal neutron well counter means for detecting neutrons emitted by said sample;

    means for producing inner and outer coincidence count rate signals and inner and outer singles count rate signals from said inner and outer detector rings;

    means for producing a combined coincident count rate signal indicative of said mass of $^{240}Pu$ in said sample from said inner and outer coincidence count rate signals;

    means for generating a multiplication correction signal for induced fission neutrons;

    means for generating a $(\alpha,n)$ correction signal for induced $(\alpha,n)$ reaction product neutrons using said inner and outer single count rate signals;

means for generating a moderation correction signal for variations of moderation due to moisture in said sample using said inner and outer coincidence count rate signal;

means for generating a proportionality correction signal;

means for modifying said combined coincidence count rate signal by said multiplication correction signal, said $(\alpha,n)$ correctional signal, said moderation correction signal, and said proportionality correction signal to produce a modified combined coincidence count rate signal representative of the mass of $^{240}Pu$ in said sample.

2. The device of claim 1 wherein said multiplication correction signal comprises $(M_{240})^x$.

3. The device of claim 1 wherein said $(\alpha,n)$ correction signal comprises $(\dot{T}_0/T_I)^y$.

4. The device of claim 1 wherein said moderation correction signal comprises $\dot{n}_I/\dot{n}_O)^z$.

5. The device of claim 1 wherein said proportionality correction signal comprises SRR.

6. A device for nondestructively assaying a sample of $PuO_2$ admixed with various contaminants to determine the mass of $^{239}Pu$ in said sample comprising:

thermal neutron well counter means having inner and outer detector rings separated by a moderating material, said thermal neutron well counter means for detecting neutrons emitted by said sample;

means for producing inner and outer coincidence count rate signals and inner and outer singles count rate signals from said inner and outer detector rings;

means for producing a combined coincident count rate signal indicative of said mass of $^{239}$Pu in said sample from said inner and outer coincidence count rate signals;

means for generating a multiplication correction signal for induced fission neutrons;

means for generating a $(\alpha,n)$ correction signal for induced $(\alpha,n)$ reaction product neutrons using said inner and outer total count rate signals;

means for generating a moderation correction signal for variations of moderation due to moisture in said sample using said inner and outer coincidence count rate signal;

means for generating a first proportionality correction signal;

means for generating a second proportionality correction signal;

means for generating a neutron source correction signal to account for the relative effective source strength of neutrons for generating said induced fission neutrons;

means for modifying said combined coincidence count rate signal by said multiplication correction signal, said $(\alpha,n)$ correction signal, said moderation correction signal, said first proportionality correction signal, said second proportionality correction signal, and said neutron source correction signal to produce a modified combined coincidence count rate signal representative of the mass of $^{239}$Pu in said sample.

7. The device of claim 6 wherein said multiplication correction signal comprises $(M_{240})^{x-1}$.

8. The device of claim 6 wherein said $(\alpha,n)$ correction signal comprises $(\dot{T}_O/\dot{T}_I)^Y$.

9. The device of claim 6 wherein said moderation correction signal comprises $(\dot{n}_I/\dot{n}_O)^z$.

10. The device of claim 6 wherein said first proportionality correction signal comprises SRR.

11. The device of claim 6 wherein said first proportionality correction signal comprises V.

12. The device of claim 6 wherein said neutron source correction signal comprises $(M_{240})^W$.

13. A device for nondestructively detecting and measuring the quantity of material of mass number 240 in a sample of spontaneously fissioning material by passive thermal neutron coincidence counting comprising:

well counter means having inner and outer rings separated by a moderating material, said well counter means for detecting neutrons emitted by said sample of spontaneously fissioning material;

coincidence counter means for generating inner and outer coincidence count signals representative of the number of accumulated coincident neutron pairs detected by said inner and outer rings;

means for generating inner and outer singles count signals representative of the number of accumulated neutrons detected by said inner and outer rings;

clock means for generating a clock signal representative of elapsed counting time;

means for dividing said inner and outer coincidence count signals and said inner and outer singles count signals by said clock signal to produce inner and outer coincidence count rate signals and inner and outer singles count rate signals;

means for correcting said inner and outer coincidence count rate signals and said inner and outer singles count rate signals for electronic circuitry deadtime and background radiation;

means for combining said corrected inner and outer coincidence count rate signals to produce a combined coincidence count rate signal indicative of said quantity of material of mass number 240 in said sample;

means for modifying said calibrated coincidence count rate signal for coincident pairs of neutrons resulting from induced fissions and induced (α,n) reaction product neutrons and for variations of moderation due to the moisture content of said sample;

means for calibrating said modified coincidence count rate signal to produce a signal representative of the quantity of material of mass number 240 in said sample of spontaneously fissioning material.

14. A device for nondestructively detecting and measuring the quantity of material of mass number 239 in a sample of spontaneously fissioning material by passive thermal neutron coincidence counting comprising:

well counter means having inner and outer rings separated by a moderating material, said well counter means for detecting neutrons emitted by said sample of spontaneously fissioning material;

coincidence counter means for generating inner and outer coincidence count signals representative of the number of accumulated coincident neutron pairs detected by said inner and outer rings;

means for generating inner and outer singles count signals representative of the number of accumulated neutrons detected by said inner and outer rings;

clock means for generating a clock signal representative of elapsed counting time;

means for dividing said inner and outer coincidence count signals and said inner and outer singles count signals by said clock signal to produce inner and outer coincidence count rate signals and inner and outer singles count rate signals;

means for correcting said inner and outer coincidence count rate signals and said inner and outer singles count rate signals for electronic circuitry deadtime and background radiation;

means for combining said corrected inner and outer coincidence count rate signals to produce a combined coincidence count rate signal indicative of said quantity of material of mass number 240 in said sample;

means for modifying said combined coincidence count rate signal for coincident pairs of neutrons resulting from induced fissions and induced (α,n) reaction product neutrons, for the relative effective source strength of neutrons for generating induced fission neutrons, and for variations of moderation due to the moisture content of said sample;

means for calibrating said modified coincidence count rate signal to produce a signal representative of the quantity of material of mass number 239 in said sample of spontaneously fissioning material.

15. A device for assaying a sample of material to determine the mass of a given substance in said sample, comprising:

a neutron counter for detecting emissions from the sample; and

means responsive to the detection by the counter of a predetermined pattern of emissions for generating a signal representative of the mass of said substance;

characterised by means for determining characteristics of said sample affecting the accuracy of representation of said mass by said signal; and

means responsive to said determining means
for modifying said signal to generate a corrected
signal.

1/5

Fig. 1

Fig. 2

Fig.3

Fig.4

Fig.5

**Fig. 6**